# EUROPÄISCHE PATENTSCHRIFT

(11) **EP 1 118 523 B1**
(45) Veröffentlichungstag und Bekanntmachung des Hinweises auf die Patenterteilung: **16.07.2008**
(21) Anmeldenummer: 00128677.2
(22) Anmeldetag: 29.12.2000
(51) Int. Cl.: B62B 3/02, B62B 3/00

(54) **Transportvorrichtung**
Transport device
Dispositif de transport

(30) Priorität: 19.01.2000 DE 10002210
(43) Veröffentlichungstag der Anmeldung: 25.07.2001
(73) Patentinhaber: GEBHARDT Transport- und Lagersysteme GmbH, 93413 Cham (DE)
(72) Erfinder: Gebhardt, Max, 93413 Cham (DE)
(74) Vertreter: Bergmeier, Werner

(56) Entgegenhaltungen:
- EP-A- 0 487 147
- DE-U- 9 213 126
- FR-A- 2 596 718
- US-A- 4 077 644

## Beschreibung

Die vorliegende Erfindung betrifft eine Transportvorrichtung mit einer Bodenplatte, die für die Aufnahme wenigstens einer Seitenwand und mehrerer, insbesondere an den Ecken der Bodenplatte angeordneter Laufrollen bestimmt ist. An der Bodenplatte sind eine Aufnahmevorrichtung zur Aufnahme der Seitenwand und Befestigungsmittel für die auf Montageplatten angeordneten Laufrollen angeordnet, wobei die Aufnahmevorrichtung eine Öffnung der Bodenplatte umfasst.

Gattungsgemäße Transportvorrichtungen werden üblicherweise zum Transport, kommissionierter Güter, beispielsweise in der Lebensmittelindustrie, verwendet. Hierzu wird die kommissionierte Ware auf einem LKW, welcher eine Vielzahl der Transportvorrichtungen trägt, beispielsweise in Lebensmittelmärkte gefahren. Dort werden die Transportvorrichtungen nach dem Abladen vom LKW in dem Lebensmittelmarkt nach und nach entleert. Die gattungsgemäßen Transportvorrichtungen sind als Rollboxen seit langem bekannt. Sie bestehen in der Regel aus einer Bodenplatte aus Kunststoff, Holz oder Metall. Üblicherweise ist an zwei einander gegenüberliegenden Seitenkanten der Bodenplatte jeweils eine Seitenwand, die als Gitter ausgebildet ist, angeordnet. Die Gitter bestehen aus einem Oberrohr, das sich über die Ober- und die Seitenkanten der Seitenwand erstreckt, sowie aus einem Unterrohr das zwischen den Enden des Oberrohrs eingebracht ist. Derartige Rollboxen mit Seitenwänden sind von der Anmelderin in großem Umfang eingesetzt.

Obwohl die Rollboxen sehr stabil ausgebildet sind, wird insbesondere bei unsachgemäßer Behandlung der Rollboxen nach langer Benutzungsdauer gelegentlich festgestellt, dass die Halterungen für die Seitenwände ausgeschlagen werden. Die Seitenwände garantieren dann keinen sicheren Halt mehr für die in der Rollbox gelagerten Güter, wodurch zusätzliche Halteeinrichtungen angeordnet werden müssen.

So zeigt beispielsweise die DE 92 13 126 U1 einen gattungsgemäßen Rollcontainer mit einem horizontalen Tragrahmen mit einer rechteckigen Grundform. Der Tragrahmen besteht aus längs und quer verlaufenden, mittels Schrauben zusammengehaltenen, Brettern und weist jeweils ein Paar längs und ein Paar quer verlaufende Rahmenschenkel auf. Zur Sicherung der zu transportierenden Last sind dem Tragrahmen zudem seitliche Metallgitter zugeordnet, die von Winkelblechen, die sich an den Ecken des Tragrahmens befinden, aufgenommen werden. Um ein leichtes Austauschen von stark beanspruchten Bauteilen des Rollcontainers zu gewährleisten, schlägt die DE 92 13 126 U1 vor, die einzelnen Rahmenschenkel des Tragrahmens, die damit verbundenen Zwischenbretter sowie die genannten Winkelbleche derart auszugestalten, dass diese lösbar miteinander verbindbar sind. Hierdurch ergibt sich die Möglichkeit, die jeweiligen Einzelteile des Tragrahmens bei einer Beschädigung derselben unabhängig voneinander auszutauschen. Jedoch wird auch in diesem Fall lediglich darauf abgestellt, beschädigte bzw. von Verschleiß betroffene Elemente des Rollcontainers schnell und einfach erneuern zu können. Eine Erhöhung der Stabilität desselben wird hingegen nicht erreicht.

Aus der EP 0 487 147 A1 ist ebenfalls eine gattungsgemäße Transportvorrichtung bekannt. Die Bodenplatte weist hierbei an ihren Ecken Öffnungen auf, in welche die Enden der Oberrohre der Seitenwände eingesteckt werden. Die über die Seitenwände hinausragenden Oberrohre bzw. Stifte sorgen für einen weitgehend sicheren Halt der Seitenwände auf der Bodenplatte. Durch die Seitenwände ist es möglich eine Vielzahl von Gütern auf der Transportvorrichtung zu transportieren. Die Führungen der Oberrohre bzw. Stifte wird mittels ösenartiger metallener Bauteilen bewirkt, welche mit einer Verstärkung der Bodenplatte verschweißt sind. Die Verstärkung ist ihrerseits in eine Aussparung der Bodenplatte eingelegt und wird mittels der Montageplatten der Rollen festgeklemmt. Nachteilig bei dieser Ausführung ist es, dass durch den relativ großen Hebelarm, welcher über die Öse auf die Verstärkung wirkt ein Ausschlagen der Kunststoffaufnahme für die Verstärkung in der Bodenplatte zu befürchten ist. Eine sichere und stabile Befestigung der Seitenwand ist dann wieder nicht gegeben. Darüber hinaus ist die Gestaltung der Ösen sehr kostenaufwendig ausgeführt, wodurch die Bodenplatte in ihren Herstellungskosten deutlich erhöht ist.

Aufgabe der vorliegenden Erfindung ist es, die Nachteile des Standes der Technik zu vermeiden und insbesondere eine besonders kostengünstige Herstellung einer Bodenplatte zu ermöglichen, mit welcher die Haltbarkeit der Bodenplatten deutlich gesteigert wird.

Die Aufgabe wird gelöst mit einer Transportvorrichtung mit den Merkmalen des Anspruchs 1. Erfindungsgemäß weist eine Verstärkung der Aufnahmevorrichtung eine Platte auf, wobei die Platte und die Bodenplatte miteinander korrespondierende Öffnungen zur Aufnahme der Seitenwand aufweisen und die Platte zusammen mit der Montageplatte an der Bodenplatte fest angeordnet ist. Hierdurch ist auf besonders einfache Weise ohne besondere Befestigungsvorrichtungen oder Vorkehrungen in der Bodenplatte eine verstärkte Transportvorrichtung geschaffen. Die Verstärkung der Aufnahmevorrichtung kann dabei wahlweise in die Transportvorrichtung eingebracht werden. Bei Transportvorrichtungen, welche voraussichtlich nicht so hoch beansprucht werden, ist diese plattenförmige Aufnahmevorrichtung bzw. deren Verstärkung bei einer entsprechenden Ausführung der Bodenplatte entfernbar, ohne dass die Funktionsfähigkeit der Transportvorrichtung an sich eingeschränkt ist. Dadurch dass die Platte zusammen mit der Montageplatte der Laufrollen an der Bodenplatte fest angeordnet ist, sind eine spezielle Befestigungsvorrichtung sowie eigene Montageschritte weitgehend verzichtbar. Zusätzliche Befestigungsvorrichtungen für die Platte an der Bodenplatte sind bei der Erfindung nicht erforderlich. Über die Platte wird die Verstärkung der Aufnahmevorrichtung zusammen mit der Montageplatte der Laufrollen an der Bodenplatte beispielsweise angeschraubt. Die Verstärkung der Aufnahmevorrichtung erhält somit eine feste Verbindung zu der Bodenplatte, wodurch auch eine starke Krafteinleitung über die daran angeordnete Seitenwand auf die Bodenplatte großflächig und damit schonend einbringbar ist.

Ist die Montageplatte in der Bodenplatte versenkt angeordnet, so wird auf besonders vorteilhafte Weise die Bodenplatte und damit die Transportvorrichtung im Betrieb tiefergelegt. Hierdurch wird zuverlässig vermieden, dass es beim Verschieben der Transportvorrichtung zu keinem Verhaken zwischen der Transportvorrichtung und beispielsweise am Boden stehender Holzpaletten kommt. Die Unterfahrhöhe wird durch die versenkte Anordnung der Montageplatte geringer, so dass ein problemloser Betrieb mit einer derartiger Transportvorrichtung möglich ist. Es können Standard-Laufrollen verwendet werden, ohne dass die Bodenplatte nach unten vergrößert werden muss.

Besonders vorteilhaft ist es, wenn die Platte zum Rand der Bodenplatte hin gekröpft ist. Hierdurch wird insbesondere bei einer versenkt angeordneten Montageplatte einerseits die Befestigung der Platte an der Montageplatte ermöglicht und andererseits ist der Rand der Bodenplatte so tief angeordnet, dass eine vorteilhafte niedrige Unterfahrhöhe entsteht. Am Rand der Platte kann dabei die Aufnahmevorrichtung oder Verstärkung der Aufnahmevorrichtung angeordnet sein. Hierdurch wird vorteilhafterweise bewirkt, dass die Führung der Seitenwand so erfolgt, dass die Bodenplatte bei einem Auslenken der Seitenwand besonders schonend beansprucht wird. Der Drehpunkt einer Auslenkung der Seitenwand ist dann nämlich an dem unteren Ende der Bodenplatte, so dass die auf die Bodenplatte und in der Führung der Seitenwand in der Bodenplatte auftretende Kraft gering ist.

Besonders widerstandsfähig ist die Platte, wenn sie aus Eisen hergestellt ist. Hierdurch ist ein Ausschlagen der Aufnahmevorrichtung weitgehend zu vermeiden.

Ist die Platte an einem Eck der Bodenplatte mit der Platte an einem anderen Eck der Bodenplatte fest verbunden, so entsteht insgesamt eine besonders stabile Ausführung der Aufnahmevorrichtung bzw. deren Verstärkung. Au-ßerdem wird die Tragfähigkeit der Bodenplatte deutlich erhöht, da die Verbindung der Platten eine zusätzliche Verstärkung der Bodenplatte bewirkt.

Ist die Seitenwand ein Aufsatzrahmen, der in die Aufnahmevorrichtung oder die Verstärkung der Aufnahmevorrichtung mittels eines Rohres eingesteckt ist, so ist eine besonders einfache Verbindung der Seitenwand mit der Bodenplatte über die Aufnahmevorrichtung ermöglicht. Die Seitenwand kann dabei durch einfaches Einstecken an der Bodenplatte befestigt werden, oder für Transportvorgänge wieder von der Bodenplatte durch Herausziehen der Rohres aus der Aufnahmevorrichtung entfernt werden. Besonders wenn das Rohr der Seitenwand im Wesentlichen in der Bodenplatte geführt ist und die Platte an dem der Seitenwand abgewandten Ende des Rohres mit dem Rohr zusammenwirkt ist eine sehr einfache Ausführung der vorliegenden Erfindung geschaffen.

Um eine einfache Montage der erfindungsgemäßen Transportvorrichtung zu erzielen, ist es vorgesehen, dass die Platte, die Montageplatte und die Bodenplatte miteinander korrespondierende Löcher, Nuten und Federn und/oder Bolzen zur Befestigung mittels Befestigungselementen, insbesondere Schrauben oder Nieten aufweist. Hiermit wird durch einfache Befestigungselemente die Montageplatte der Laufrollen zusammen mit der Platte für die Aufnahmevorrichtung an der Bodenplatte mit den selben Befestigungselementen angeordnet. Es ist damit nur ein Montagevorgang erforderlich, mit welchem gleichzeitig die Platte und die Montageplatte befestigt werden. In die miteinander korrespondierenden Löcher können Schrauben oder Nieten eingesetzt werden um die Platten an der Bodenplatte anzuordnen. Nuten und Federn können dazu dienen, dass die Platte und/oder die Montageplatte teilweise in entsprechende Nuten oder Federn der Bodenplatte eingesetzt und verhakt werden und die Sicherung der Platte und der Montageplatte an der Bodenplatte mittels weiteren Schrauben oder Nieten erfolgt. Durch Kunststoffbolzen, welche in der Bodenplatte angeordnet sind und welche durch entsprechende Löcher der Platte und Montageplatte reichen, kann durch ein Verschmelzen dieser Bolzen eine ebenfalls ausreichende Befestigungsmethode erzielt werden.

Um zusätzliche Befestigungselemente zu vermeiden, kann die Platte und/oder die Montageplatte ganz oder teilweise mittels einer Clipsverbindung an der Bodenplatte befestigt sein. Bei einer entsprechenden Ausgestaltung insbesondere einer aus Kunststoff hergestellten Bodenplatte, können die Clipsverbindungen eine ausreichende Festigkeit für die Platte und die Montageplatte bringen.

Weist die Platte und/oder das Rohr und/oder die Öffnung eine Befestigungsvorrichtung zum festen Verbinden des Rohres mit der Bodenplatte auf, so ist eine zuverlässige Verbindung zwischen dem Rohr und der Bodenplatte herzustellen, die auch unter extremen Bedingungen ein versehentliches Lösen der Seitenwand von der Bodenplatte verhindert.

Weitere Vorteile der Erfindung sind in dem nachfolgenden Ausführungsbeispiel dargestellt. Es zeigt:
- **Figur 1**: eine erfindungsgemäße Transportvorrichtung,
- **Figur 2**: einen Schnitt durch eine Bodenplatte,
- **Figur 3**: eine Draufsicht auf zwei miteinander verbundene Platten.
- **Figur 4**: einen Schnitt durch eine weitere Bodenplatte.

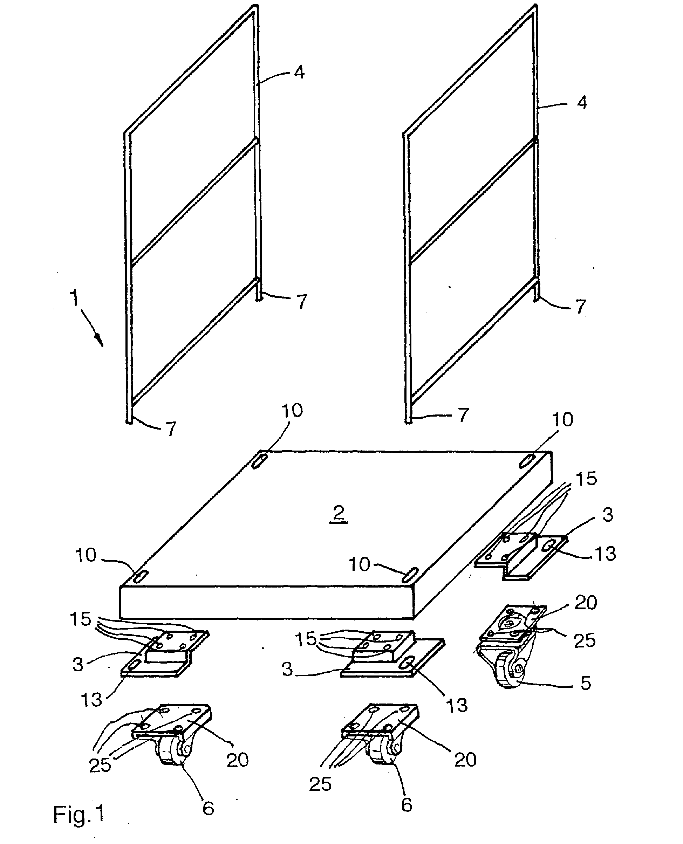

Figur 1 zeigt eine erfindungsgemäße Transportvorrichtung 1, welche in ihre wesentlichen Einzelteile zerlegt und als Explosionszeichnung dargestellt ist. An einer Bodenplatte 2 sind an der Unterseite im Bereich der vier Ecken Platten 3 befestigt. An der Oberseite der Bodenplatte 2 sind Seitenwände 4 angeordnet, die Seitenwände 4 weisen an ihrer Unterseite jeweils zwei Rohre 7, welche über die Seitenwand 4 hinausragen. Mit den Rohren 7 ist die Seitenwand 4 in Öffnungen 10 der Bodenplatte 2 eingesetzt. Die Öffnungen 10 sind so groß dimensioniert, dass die Rohre 7 einfach in die Öffnungen 10 eingeführt werden können, andererseits aber dem Rohr 7 und damit der Seitenwand 4 nicht zu viel Spiel lassen um eine ausreichende Führung der Seitenwand 4 zu gewährleisten.

Die von der Unterseite an der Bodenplatte 2 angeordneten Platten 3 weisen ihrerseits Öffnungen 13 auf. Diese Öffnungen 13 korrespondieren mit den Öffnungen 10 der Bodenplatte 2. Die Rohre 7 der Seitenwände 4 sind so lang ausgeführt, dass sie bei aufgesteckter Seitenwand 4 durch die Öffnung 10 hindurch bis in die Öffnung 13 der Platte 3 hineinreichen. Hierdurch wird, insbesondere bei einer stabilen Ausführung der Platte 3 eine besonders hohe Festigkeit der Aufnahmevorrichtung der Bodenplatte 2, welche in diesem Ausführungsbeispiel durch die Öffnung 10 und die Öffnung 13 gebildet ist, erhalten.

An der Unterseite der Bodenplatte 2 sind ebenfalls Laufrollen angeordnet. Diese bestehen aus zwei Lenkrollen 5 (nur eine dargestellt) und zwei Bockrollen 6. Jede der Rollen 5, 6 weist eine Montageplatte 20 auf, mit welcher die Laufrolle 5, 6 an der Bodenplatte 2 befestigt ist. In der Montageplatte 20 sind Bohrungen 25 angeordnet, welche mit Bohrungen 15 der Platten 3 sowie nicht dargestellten Bohrungen oder Aufnahmen in der Bodenplatte 2 korrespondieren. Durch die Bohrungen 25 und 15 können die Laufrollen 5, 6 und Platten 3 an der Bodenplatte 2 angeschraubt werden.

Die Platten 3 sind jeweils gekröpft ausgebildet. Dies bedeutet, dass die Flächen, in welchen die Montageplatten 20 der Laufrollen 5, 6 befestigt werden sollen, in einer weiter innerhalb der Bodenplatte 2 liegenden Ebene im Vergleich zu der die Öffnung 13 aufweisenden Ebene der Platte 3 befindet. Damit ist die Laufrolle 5, 6 im Vergleich zum Rand der Bodenplatte 2 versenkt angeordnet. Die Unterfahrhöhe der Bodenplatte 2 wird hierdurch geringer, wodurch im Einsatz der Transportvorrichtung 1 ein problemloses Zusammenwirken mit beispielsweise auf dem Boden stehenden Paletten ermöglicht wird.

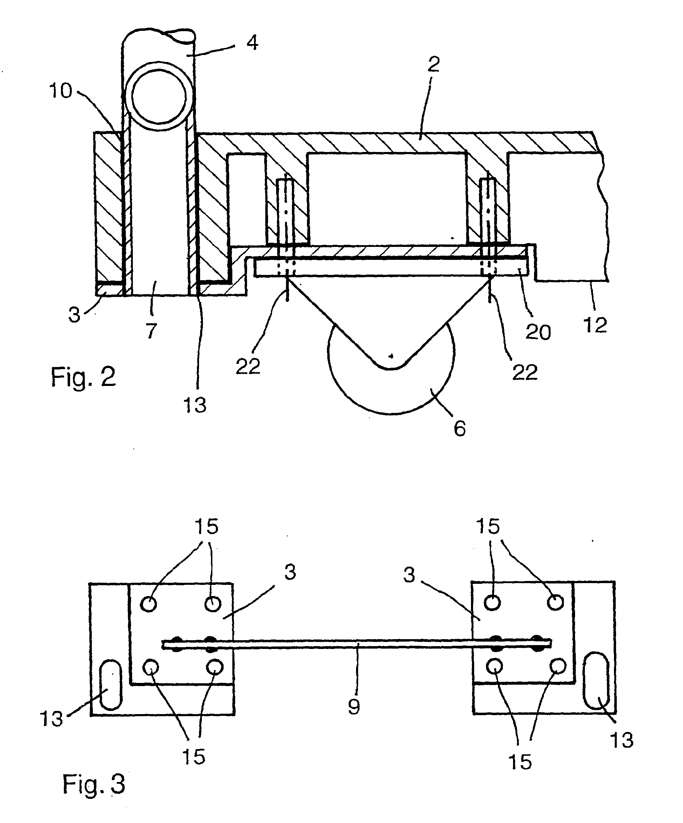

Figur 2 zeigt einen Schnitt durch eine Bodenplatte 2 im Bereich einer Bockrolle 6. Zwischen der Montageplatte 20 und der Bodenplatte 2 ist die Platte 3 angeordnet. Montageplatte 20 und Platte 3 sind mittels Schrauben 22 in Vorsprüngen der Bodenplatte 2 eingeschraubt. Im Vergleich zu einer Unterkante 12 der Bodenplatte 2 ist die Ebene, in welcher die Platte 3 und die Montageplatte 20 angeordnet sind, höher angeordnet, so dass die Unterfahrhöhe der Bodenplatte 2 gering ist.

Die Platte 3 ist zum Rand hin gekröpft ausgebildet. Der Bereich der Platte 3, in welchem die Öffnung 13 angeordnet ist, ist in den Bereich des Endes des Rohres 7 hinein verlegt. Hierdurch wird eine besonders gute Abstützung des Rohres 7 und damit der Seitenwand 4 in der Bodenplatte 2 und der Aufnahmevorrichtung 10 bzw. 13 bewirkt. Die Platte 3 wirkt dabei als eine Verstärkung der Aufnahmevorrichtung, insbesondere dann, wenn sie aus Eisen ausgebildet ist. Durch die Anordnung der Platte 3 im Endbereich des Rohres 7 wird bei einer Kunststoffausführung der Bodenplatte 2 die Öffnung 10 nur gering belastet, so dass ein Verschleiß der Öffnung 10 weitgehend vermieden wird.

Figur 3 zeigt eine Draufsicht auf zwei Platten 3, welche mit einer Verbindung 9 verbunden sind. Die Verbindung 9 ist in diesem Ausführungsbeispiel mittels Schweißpunkten mit den Platten 3 verbunden. Durch die stabile Befestigung der Platten 3 an der Bodenplatte 2 ist hier eine wenig massive Verbindung zwischen der Verbindung 9 und den Bodenplatten 3 ausreichend. Es genügen somit wenige Schweißpunkte auf der jeweiligen Platte 3 um bereits eine hohe Festigkeit der kompletten Einrichtung zu erzielen. Die Verbindung 9 kann beispielsweise als ein Eisen ausgebildet sein, welches hochkant auf der Platte 3 angeordnet ist. Hierdurch ist ein besonders großes Trägheitsmoment gegen eine Durchbiegung der Bodenplatte 2 erzielt.

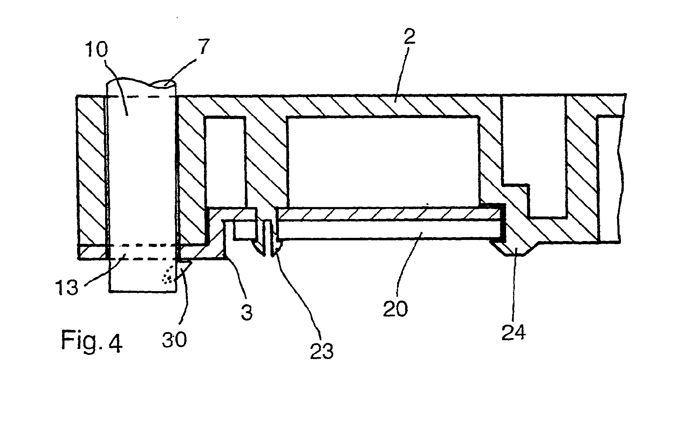

Figur 4 zeigt schematisch eine weitere Befestigungsmöglichkeit der Platte 3 und einer Montageplatte 20 (hier ohne Laufrolle dargestellt) an der Bodenplatte 2. Die Platte 3 und die Montageplatte 20 sind dabei in den Bereich einer Nase 24 eingeschoben. Zur Fixierung der Platte 3 und der Montageplatte 20 sind anschließend die Platte 3 und die Montageplatte 20 mit zwei korrespondierenden Öffnungen über einen Clips 23 bewegt. Der Clips 23 sichert die Platte 3 und die Montageplatte 20 gegen Verrutschen oder Herausfallen in Bezug auf die Bodenplatte 2. Bei dieser Befestigungsart ist es besonders vorteilhaft, dass keine zusätzlichen Verbindungsmittel wie Schrauben oder Nieten benötigt werden.

An dem Rohr 7 ist eine Befestigungsvorrichtung 30 angeordnet, welche das Rohr 7 und die Bodenplatte 2 fest miteinander verbindet und ein unbeabsichtigtes Herausziehen des Rohres 7 aus der Öffnung 10 bzw. 13 verhindert. Die Befestigungsvorrichtung ist hier als Riegel ausgeführt, welcher bei eingeschobenem Rohr 7 ausklappt und für die Verriegelung sorgt. Selbstverständlich sind auch andere Verriegelungsvorrichtungen, wie beispielsweise Stifte oder Federbolzen möglich.

Die vorliegende Erfindung ist nicht auf die hier dargestellten Ausführungsbeispiele beschränkt. So können im Rahmen der Patentansprüche andere Befestigungen der Seitenwand 4 an der Bodenplatte 2 vorgesehen sein, welche ebenfalls durch eine Platte 3 verstärkt werden.

Auch eine nicht gekröpfte Ausführung der Platte 3 ist in den Rahmen der Ansprüche fallend zu betrachten, solange sie nicht ausdrücklich ausgeschlossen ist.

## Patentansprüche

1. Transportvorrichtung mit einer Bodenplatte (2), die für die Aufnahme wenigstens einer Seitenwand (4) und mehrerer, insbesondere an den Ecken der Bodenplatte (2) angeordneter Laufrollen (5, 6) bestimmt ist, wobei an der Bodenplatte (2) eine Aufnahmevorrichtung zur Aufnahme der Seitenwand (4) und Befestigungsmittel für die auf Montageplatten (20) angeordneten Laufrollen (5, 6) angeordnet sind und die Aufnahmevorrichtung eine Öffnung (10) der Bodenplatte (2) umfasst, **dadurch gekennzeichnet, dass** die Öffnung (10) der Bodenplatte (2) eine Führung bildet, die eigenständig eine funktionsfähige Aufnahme für die Seitenwand (4) gewährleistet, und eine Verstärkung der Aufnahmevorrichtung eine Platte (3) aufweist, wobei die Platte (3) und die Bodenplatte (2) miteinander korrespondierende Öffnungen (10, 13) zur Aufnahme der Seitenwand (4) aufweisen und die Platte (3) zusammen mit der Montageplatte (20) an der Bodenplatte (2) mit denselben Befestigungsmitteln angeordnet ist.

2. Transportvorrichtung nach Anspruch 1, **dadurch gekennzeichnet, dass** die Montageplatte (20) in der Bodenplatte (2) versenkt angeordnet ist.

3. Transportvorrichtung nach einem der vorherigen Ansprüche, **dadurch gekennzeichnet, dass** die Platte (3) zum Rand der Bodenplatte (2) hin gekröpft ist.

4. Transportvorrichtung nach einem der vorherigen Ansprüche, **dadurch gekennzeichnet, dass** die Platte (3) aus Eisen ist.

5. Transportvorrichtung nach einem der vorherigen Ansprüche, **dadurch gekennzeichnet, dass** die Platte (3) an einer Ecke der Bodenplatte (2) mit der Platte (3) an einer anderen Ecke der Bodenplatte (2) fest verbunden ist.

6. Transportvorrichtung nach einem der vorherigen Ansprüche, **dadurch gekennzeichnet, dass** die Seitenwand (4) ein Aufsatzrahmen ist, der in die Aufnahmevorrichtung und die Verstärkung der Aufnahmevorrichtung mittels eines Rohres (7) eingesteckt ist.

7. Transportvorrichtung nach Anspruch 6, **dadurch gekennzeichnet, dass** das Rohr (7) der Seitenwand (4) im wesentlichen in der Bodenplatte (2) geführt ist und die Platte (3) an dem der Seitenwand (4) abgewandten Ende des Rohres (7) mit dem Rohr (7) zusammenwirkt.

8. Transportvorrichtung nach einem der vorherigen Ansprüche, **dadurch gekennzeichnet, dass** die Platte (3), die Montageplatte (20) und die Bodenplatte (2) miteinander korrespondierende Löcher, Nuten und Federn und/oder Bolzen zur Befestigung mittels Befestigungselementen, insbesondere Schrauben (22) oder Nieten aufweist.

9. Transportvorrichtung nach einem der vorherigen Ansprüche, **dadurch gekennzeichnet, dass** die Platte (3) und die Montageplatte (20) mittels einer Klipsverbindung (23) an der Bodenplatte (2) befestigt sind.

10. Transportvorrichtung nach einem der Ansprüche 6 bis 9, **dadurch gekennzeichnet, dass** die Platte (3) und/oder das Rohr (7) und/oder die Öffnung (10) eine Befestigungsvorrichtung (30) zum festen Verbinden des Rohres (7) mit der Bodenplatte (2) aufweist.

## Claims

1. A transporting device having a base plate (2) intended to accept at least one side panel (4) and several castors (5, 6) located particularly at the corners of the base plate (2), whereby a receptacle to hold the side panel (4) and means of fastening for the castors (5, 6) positioned on the assembly plate (20) are located on the base plate (2), and where the receptacle comprises an opening (10) in the base plate (2), **characterized in that** the opening (10) of the base plate (2) constitutes a guide, itself capable of providing the function of a receptacle for the side panel (4), and a reinforcement for the receptacle incorporates a plate (3), whereby the plate (3) and the base plate (2) have mutually corresponding openings (10, 13) to accept the side panel (4), and the plate (3) together with the assembly plate (20) is held on the base plate (2) by the same means of fastening.

2. A transporting device according to claim 1, **characterized in that** the assembly plate (20) is recessed into the base plate (2).

3. A transporting device according to one of the foregoing claims, **characterized in that** the plate (3) is elbowed from the edge of the base plate (2).

4. A transporting device according to one of the foregoing claims, **characterized in that** the plate (3) is made of iron.

5. A transporting device according to one of the foregoing claims, **characterized in that** the plate (3) at one corner of the base plate (2) is rigidly fixed to the plate (3) at another corner of the base plate (2).

6. A transporting device according to one of the foregoing claims, **characterized in that** the side panel (4) is an upper frame that is inserted into the receptacle and the reinforcement of the receptacle by means of a tube (7).

7. A transporting device according to Claim 6, **characterized in that** the tube (7) of the side panel (4) is primarily held in place by the base plate (2), and the plate (3) acts together with the tube (7) at the end of the tube (7) that is facing away from the side panel (4).

8. A transporting device according to one of the foregoing claims, **characterized in that** the plate (3), the assembly plate (20) and the base plate (2) have corresponding holes, grooves and tongues and/or bolts for fastening by means of fastening elements, in particular bolts (22) or rivets.

9. A transporting device according to one of the foregoing claims, **characterized in that** the plate (3) and the assembly plate (20) are fastened by means of a snap-on connection (23) to the base plate (2).

10. A transporting device according to one of Claims 6 to 9, **characterized in that** the plate (3) and/or the tube (7) and/or the opening (10) have a fastening device (30) for firmly connecting the tube (7) to the base plate (2).

## Revendications

1. Dispositif de transport comportant une plaque de base (2) destinée à recevoir au moins une paroi latérale (4) ainsi qu'une multiplicité de roulettes (5, 6) disposées en particulier aux coins de la plaque de base (2), dans lequel un dispositif de montage destiné à recevoir la paroi latérale (4) et des moyens de fixation pour les roulettes (5, 6) montées sur la plaque de montage (20) sont agencés sur la plaque de base (2) et dans lequel le dispositif de montage comprend une ouverture (10) de la plaque de base (2), **caractérisé en ce que** l'ouverture (10) de la plaque de base (2) constitue un guide qui assure à lui seul un dispositif de montage fonctionnel pour la paroi latérale (4) et **en ce qu'**un renforcement du dispositif de montage comporte une plaque (3), dans lequel la plaque (3) et la plaque de base (2) comportent des ouvertures correspondant entre elles (10, 13) destinées au montage de la paroi latérale (4) et dans lequel la plaque (3) est agencée conjointement avec la plaque de montage (20) sur la plaque de base (2) au moyen des mêmes moyens de fixation.

2. Dispositif de transport selon la revendication 1, **caractérisé en ce que** la plaque de montage (20) est agencée dans un renfoncement de la plaque de base (2).

3. Dispositif de transport selon l'une des revendications précédentes, **caractérisé en ce que** la plaque (3) est décentrée vers le bord de la plaque de base (2).

4. Dispositif de transport selon l'une des revendications précédentes, **caractérisé en ce que** la plaque (3) est en fer.

5. Dispositif de transport selon l'une des revendications précédentes, **caractérisé en ce que** la plaque (3) d'un coin de la plaque de base (2), est fixée à la plaque (3) d'un autre coin de la plaque de base (2).

6. Dispositif de transport selon l'une des revendications précédentes, **caractérisé en ce que** la paroi latérale (4) est une rehausse insérée dans le dispositif de montage et dans le renforcement du dispositif de montage au moyen d'un tube (7).

7. Dispositif de transport selon la revendication 6, **caractérisé en ce que** le tube (7) de la paroi latérale (4) est essentiellement emboîté dans la plaque de base (2) et **en ce que** la plaque (3) coopère avec le tube (7) à l'extrémité du tube (7) opposée à la paroi latérale (4).

8. Dispositif de transport selon l'une des revendications précédentes, **caractérisé en ce que** la plaque (3), la plaque de montage (20) et la plaque de base (2) comportent des orifices, des rainures et des languettes et/ou des boulons correspondant entre eux et destinés à une fixation au moyen d'éléments de fixation, en particulier des vis (22) ou des rivets.

9. Dispositif de transport selon l'une des revendications précédentes, **caractérisé en ce que** la plaque (3) et la plaque de montage (20) sont fixées à la plaque de base (2) au moyen d'une connexion par agrafe (23).

10. Dispositif de transport selon l'une des revendications 6 à 9, **caractérisé en ce que** la plaque (3) et/ou le tube (7) et/ou l'ouverture (10) comportent un dispositif de fixation (30) permettant de fixer le tube (7) à la plaque de base (2).
